# EUROPEAN PATENT APPLICATION

(11) **EP 4 379 439 A1**
(43) Date of publication of application: **05.06.2024**
(21) Application number: 22848964.7
(22) Date of filing: 19.04.2022
(51) Int. Cl.: G02B 6/44

(54) **OPTICAL CABLE AND OPTICAL CABLE MANUFACTURING METHOD**

(30) Priority: 29.07.2021 JP 2021124564
(71) Applicant: FUJIKURA LTD., Koto-ku Tokyo 135-8512 (JP)
(72) Inventor: SHIMIZU, Shogo, Sakura-shi, Chiba 285-8550 (JP); KANEKO, Soichiro, Sakura-shi, Chiba 285-8550 (JP); NAMAZUE, Akira, Sakura-shi, Chiba 285-8550 (JP); OSATO, Ken, Sakura-shi, Chiba 285-8550 (JP)
(74) Representative: Osha BWB
(86) International application number: PCT/JP2022/018194
(87) International publication number: WO 2023/007881

(57) **Abstract**

An optical cable according to the present disclosure includes a plurality of optical fiber units, the optical fiber unit including a fiber bundle constituted by a plurality of optical fibers. The plurality of optical fiber units are twisted together in an S-Z configuration by reversing the twisting direction. A twisting angle by which the optical fiber units are twisted in a circumferential direction between one reversal part, at which the twisting direction is reversed, and an adjacent reversal part is 540 degrees or greater.

## Description

### TECHNICAL FIELD

The present invention relates to an optical cable and an optical cable manufacturing method. The present application claims priority based on Japanese Patent Application No. 2021-124564 filed on July 29, 2021, the contents of which are incorporated herein by reference.

### BACKGROUND ART

A technique is known to produce an optical cable by twisting together a plurality of optical fiber units, each constituted by bundling a plurality of optical fibers, in order to reduce differences in fiber length among the optical fibers when the optical cable is bent. PTL 1 discloses a technique of twisting together a plurality of optical fiber units in an S-Z configuration (or in a single direction).

### CITATION LIST

### PATENT LITERATURE

PTL 1: Japanese Patent Application Laid-open Publication No. 2019-159078

### SUMMARY

### TECHNICAL PROBLEM

In order to reduce the allowable bending radius of an optical cable, it is desirable to twist the optical fiber units at a short pitch. However, if the optical fiber units are twisted at a short pitch in an S-Z configuration, the twisting is likely to untwine (i.e., untwisting is likely to occur) at reversal parts where the twisting direction is reversed. This may result in that, in the vicinity of the reversal parts, the optical fibers may return to a state where they extend along the length direction of the optical cable. If the rate of parts (i.e., straight parts) in the optical fibers extending along the length direction becomes high, transmission loss may increase when the optical cable is bent.

An objective of the present invention is to suppress transmission loss in an optical cable.

### SOLUTION TO PROBLEM

A primary aspect of the present invention for achieving the aforementioned objective is an optical cable including a plurality of optical fiber units, the optical fiber unit including a fiber bundle constituted by a plurality of optical fibers. The plurality of optical fiber units are twisted together in an S-Z configuration by reversing the twisting direction. A twisting angle by which the optical fiber units are twisted in a circumferential direction between one reversal part, at which the twisting direction is reversed, and an adjacent reversal part is 540 degrees or greater.

Other features of the invention will become apparent from the following description of the present Specification and Drawings.

### EFFECTS OF INVENTION

The present invention can suppress transmission loss in an optical cable.

### BRIEF DESCRIPTION OF DRAWINGS

[Fig. 1] Fig. 1A is an explanatory diagram of an optical cable 1. Fig. 1B is an explanatory diagram of an optical fiber unit 10.
[Fig. 2] An explanatory diagram of another optical cable.
[Fig. 3] Fig. 3 is an explanatory diagram of a manufacturing system 40 for manufacturing an optical cable 1.
[Fig. 4] Figs. 4A to 4C are explanatory diagrams illustrating methods for twisting a plurality of optical fiber units 10.
[Fig. 5] Fig. 5 is a comparison table of First Examples.
[Fig. 6] Fig. 6 is a comparison table of Second Examples.
[Fig. 7] Fig. 7 is a comparison table of Third Examples.

### DESCRIPTION OF EMBODIMENTS

At least the following aspects are disclosed in the Specification and Drawings as described below.

Aspect 1 relates to an optical cable including a plurality of optical fiber units, the optical fiber unit including a fiber bundle constituted by a plurality of optical fibers. The plurality of optical fiber units are twisted together in an S-Z configuration by reversing a twisting direction, and a twisting angle by which the optical fiber units are twisted in a circumferential direction between one reversal part, at which the twisting direction is reversed, and an adjacent reversal part is 540 degrees or greater. With this optical cable, transmission loss can be suppressed.

Aspect 2 relates to the optical cable of Aspect 1, wherein the twisting angle is 1800 degrees or less. Aspect 3 relates to the optical cable of Aspect 2, wherein the twisting angle is 1440 degrees or less. In this way, transmission loss can be suppressed.

Aspect 4 relates to the optical cable of any one of Aspects 1 to 3, wherein the optical fiber unit includes a bundling member configured to bundle the plurality of optical fibers. In this way, the optical fibers can be bundled by the bundling member.

Aspect 5 relates to the optical cable of Aspect 4, wherein the optical fiber unit is constituted by an intermittently-connected optical fiber ribbon. In this way, it becomes easy to bundle the plurality of optical fibers constituting the optical fiber unit.

Aspect 6 relates to the optical cable of any one of Aspects 1 to 5, wherein the twisting angle in an S direction and the twisting angle in a Z direction are substantially the same.

### EMBODIMENTS:

### {Configuration of Optical Cable 1 }

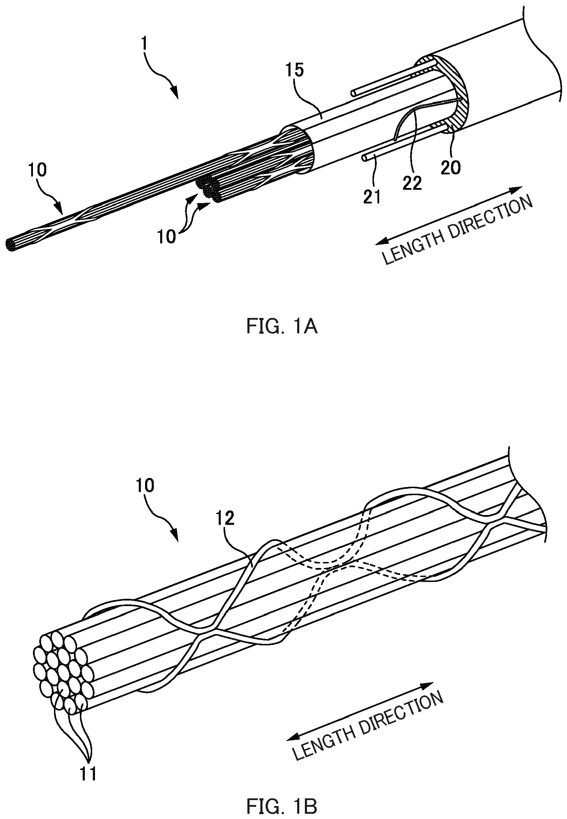

Fig. 1A is an explanatory diagram of an optical cable 1. Fig. 1B is an explanatory diagram of an optical fiber unit 10.

The optical cable 1 is a cable in which optical fibers 11 are housed. The optical cable 1 of the present embodiment is a so-called slot-less optical cable that does not include a slot rod in which slots (grooves for housing the optical fibers 11) are formed. The optical cable 1 includes a plurality of optical fiber units 10 and an outer sheath 20.

The optical fiber unit 10 is a structure in which a plurality of optical fibers 11 are bundled (gathered). The optical fiber unit 10 illustrated in the figure includes a fiber bundle and bundling members 12.

The fiber bundle is a bundle (group) of a plurality of optical fibers 11. In the present embodiment, the fiber bundle is constituted by bundling (gathering) a plurality of intermittently-connected optical fiber ribbons. The intermittently-connected optical fiber ribbon is formed by connecting the plurality of optical fibers 11 intermittently by connection parts, and at parts (i.e., separated parts) other than the connection parts, the optical fibers 11 are not bound to one another. Therefore, by constituting the optical fiber unit 10 by using intermittently-connected optical fiber ribbons, it becomes easy to bundle (gather) the plurality of optical fibers 11. Note, however, that the fiber bundle does not have to be constituted by a plurality of intermittently-connected optical fiber ribbons, and for example, it may be constituted by a single intermittently-connected optical fiber ribbon, or may be constituted by a plurality of separate optical fibers. The plurality of optical fibers 11 constituting the optical fiber unit 10 may or may not be twisted together.

The bundling member 12 is a member for bundling the plurality of optical fibers 11 constituting the fiber bundle. The bundling member 12 is, for example, a string-shaped member. The bundling member 12 is wound on the outer circumference of the fiber bundle. The optical fiber unit 10 illustrated in the figure includes a pair of bundling members 12. Each of the bundling members 12 is wound around the outer circumference of the fiber bundle in an S-Z configuration such that the winding direction is reversed at joining points. Note, however, that the bundling members 12 do not have to be wound in an S-Z configuration, and may instead be wound helically in one direction around the outer circumference of the fiber bundle. Further, the number of bundling members 12 is not limited to two. The optical fiber unit 10 does not have to include a bundling member 12. For example, in cases where the optical fiber unit 10 is constituted by a single intermittently-connected optical fiber ribbon, the optical fiber unit 10 does not have to include a bundling member 12, because the bundle of optical fibers 11 will not fall apart and separate. Alternatively, the fiber unit 12 may be constituted by covering the fiber bundle with a bundling member such as a tube or a film.

In the present embodiment, the optical cable 1 includes a plurality of optical fiber units 10. In Figs. 1A and 1B, the optical fiber units 10 are illustrated as if they extend rectilinearly in the length direction, but in the present embodiment, the plurality of optical fiber units 10 are twisted together in an S-Z configuration, as will be described below. Therefore, each of the optical fiber units 10 is twisted by a predetermined twisting angle around an axis along the length direction of the optical cable 1. Methods according to which the plurality of optical fiber units 10 are twisted will be described further below.

As illustrated in Fig. 1A, the plurality of optical fiber units 10 are housed in the outer sheath 20 in a state wrapped by a wrapping tape 15. Note, however, that the optical cable 1 does not have to include a wrapping tape 15.

The outer sheath 20 is a member configured to cover the plurality of optical fiber units 10 (and the wrapping tape 15). In this example, the outer shape of the outer sheath 20 is a substantially circular cross-sectional shape, but the outer shape of the outer sheath 20 is not limited to circular. Tension members 21 are embedded in the outer sheath 20. In addition to the tension members 21, other members (such as a rip cord 22) may also be embedded in the outer sheath 20. Further, other members, aside from the plurality of optical fiber units 10 and the wrapping tape 15, may be housed inside the outer sheath 20.

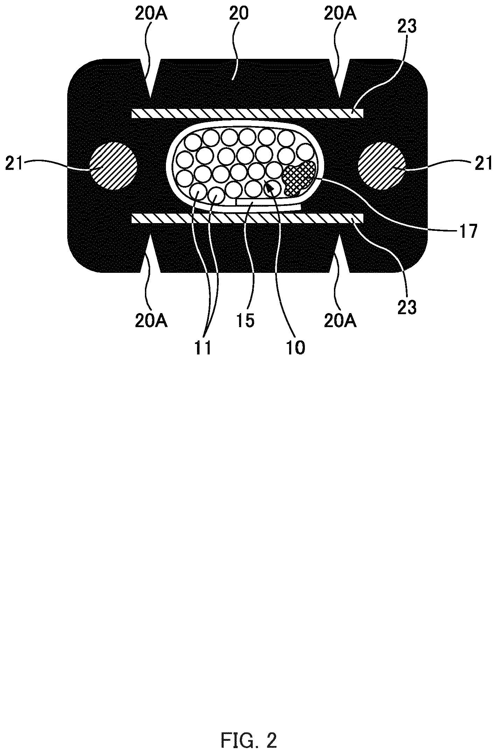

It should be noted that the shape of the optical cable is not limited to the optical cable illustrated in Fig. 1. Fig. 2 is an explanatory diagram of another optical cable 1.

The optical cable 1 illustrated in Fig. 2 is a flat optical cable (square optical cable) having a substantially rectangular cross-sectional shape. This optical cable 1 also includes a plurality of optical fiber units 10 and an outer sheath 20. Each optical fiber unit 10 is constituted, for example, by a single intermittently-connected optical fiber ribbon. It should be noted that, since the optical fiber unit 10 is constituted by a single optical fiber ribbon, the optical fiber unit 10 of the optical cable 1 illustrated in Fig. 2 does not include a bundling member 12. The plurality of (e.g., six) optical fiber units 10 are twisted together in an S-Z configuration, and are housed within the outer sheath 20 in a state wrapped by a wrapping tape 15. Further, an intervening member 17 for filling up the space is housed on the inner side of the wrapping tape 15. Note, however, that the optical cable 1 does not have to include the wrapping tape 15 or intervening member 17. Methods according to which the plurality of optical fiber units 10 are twisted will be described further below.

As illustrated in Fig. 2, the outer sheath 20 includes notches 20A. The notch 20Ais a groove along the length direction. By creating a cut in the notch 20A of the outer sheath 20 with a splitting tool, the outer sheath 20 can be separated so that the optical fiber units 10 can be extracted. Note, however, that the notches 20A do not have to be formed in the optical cable 1.

Further, as illustrated in Fig. 2, a pair of tension members and separators 23 are embedded in the outer sheath 20. The separator 23 is a sheet-shaped member and is located immediately below the notch 20A. The plurality of optical fiber units 10 are housed inside the outer sheath 20 in a state sandwiched by the pair of separators 23. The separator 23 functions to protect the optical fibers 11 from the splitting tool's blade and also functions to facilitate the removal of the optical fibers 11 from inside the outer sheath 20.

Note, however, that the optical cable 1 does not have to include the separators 23.

The shape and configuration of the optical cable are not limited to those illustrated in Figs. 1 and 2. It will suffice if the optical cable of the present embodiment includes a plurality of optical fiber units 10 twisted together in an S-Z configuration.

### {Method for Manufacturing Optical Cable 1 }

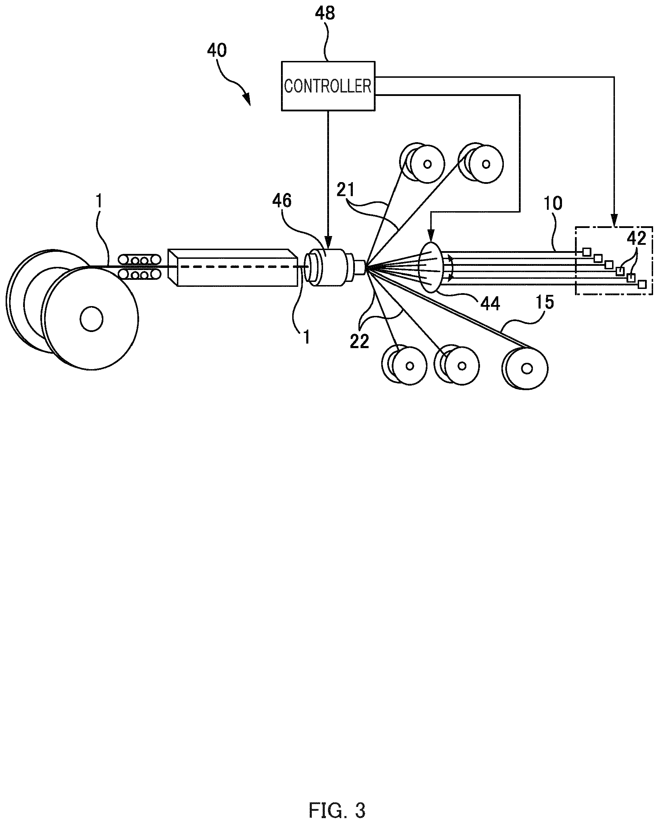

Fig. 3 is an explanatory diagram of a manufacturing system 40 for manufacturing an optical cable 1. The manufacturing system 40 illustrated in the figure is a system configured to manufacture the optical cable 1 illustrated in Fig. 1. Note, however, that the manufacturing system may manufacture the optical cable 1 illustrated in Fig. 2, or may manufacture optical cables having other shapes/configurations. The manufacturing system 40 includes suppliers 42, a twister (not illustrated) including a guide disk 44, an extruder 46, and a controller 48.

The supplier 42 is a device (supply source) configured to supply an optical fiber unit 10. The supplier 42 is constituted by, for example, bobbins configured to respectively supply a plurality of optical fiber ribbons, and a bundling device configured to wind a bundling member 12 around the outer circumference of the fiber bundle constituted by the plurality of optical fiber ribbons. Note, however, that the supplier 42 may include a ribbon manufacturing device configured to manufacture optical fiber ribbons or a fiber manufacturing device configured to manufacture optical fibers 11, instead of the bobbins for supplying the optical fiber ribbons. Further, the supplier 42 does not have to include the bundling device configured to wind the bundling member 12 around the fiber bundle. The suppliers 42 supply the optical fiber units 10 to the guide disk 44. The speed at which the suppliers 42 supply the optical fiber units 10 can be adjusted by the controller 48.

The twister is a device configured to twist together the plurality of optical fiber units 10, and includes a guide disk 44 and a driver configured to rotate (swivel back and forth) the guide disk 44. The guide disk 44 is a member configured to twist together the plurality of optical fiber units 10, and is a plate-like member having a plurality of insertion holes. The optical fiber units 10 are inserted respectively through the insertion holes in the guide disk 44. The guide disk 44 swivels back and forth about a central rotation axis, and thereby, the plurality of optical fiber units 10 are twisted together in an S-Z configuration. The plurality of optical fiber units 10 having passed through the guide disk 44 are supplied to the extruder 46 in a state twisted together in an S-Z configuration. The rotation speed of the guide disk 44 and the timing for reversing the back-and-forth rotation thereof can be adjusted by the controller 48. It should be noted that the rotation angle of the guide disk 44 and the twisting angle of the optical fiber units 10 (i.e., the angle by which the optical fiber units are twisted in the circumferential direction; described further below) are not the same (because the twisting of the optical fiber units 10 loosens), and therefore, the rotation angle of the guide disk 44 is set to an angle that is larger than the twisting angle of the optical fiber units 10. For example, in cases where the twisting angle of the optical fiber units 10 is to be 540 degrees, the guide disk 44 will be rotated back and forth by a rotation angle larger than 540 degrees. The rotation angle (swivel angle) of the guide disk 44 corresponding to the twisting angle of the optical fiber units 10 can be determined as appropriate in consideration of other manufacturing conditions, such as the time and distance until application of a member (loosening prevention member) configured to prevent loosening of the twisting of the optical fiber units 10. In the present embodiment, the outer sheath 20 serves as the loosening prevention member. Note, however, that the loosening prevention member is not limited to the outer sheath 20. For example, a string-shaped or tape-shaped loosening prevention member may be wound around the optical fiber units 10 before extrusion of the outer sheath 20, to prevent loosening of the twisting of the optical fiber units 10.

The extruder 46 is a device configured to form an outer sheath 20. The extruder 46 extrudes a resin, which becomes the outer sheath 20, onto the outer circumference of the plurality of optical fiber units 10, to thereby manufacture an optical cable 1. The extruder 46 is not only supplied with the plurality of optical fiber units 10 twisted together in an S-Z configuration, but also supplied with a wrapping tape 15 and tension members 21. The optical cable 1 manufactured by the extruder 46 is cooled with a cooling device, and is then taken up by a take-up unit (e.g., a drum).

The controller 48 is a device overseeing control of the manufacturing system 40. For example, the controller 48 is constituted by a computer, and is configured to control the operations of the suppliers 42, the guide disk 44, and the extruder 46. Herein, for example, the controller 48 controls the suppliers 42 to control the supply speed of the optical fiber units 10, and controls the driver (not illustrated) of the guide disk 44 to control the guide disk 44's rotation operation (the rotation speed, the timing for reversing the back-and-forth rotation, etc.).

### {Twisting of Optical Fiber Units 10}

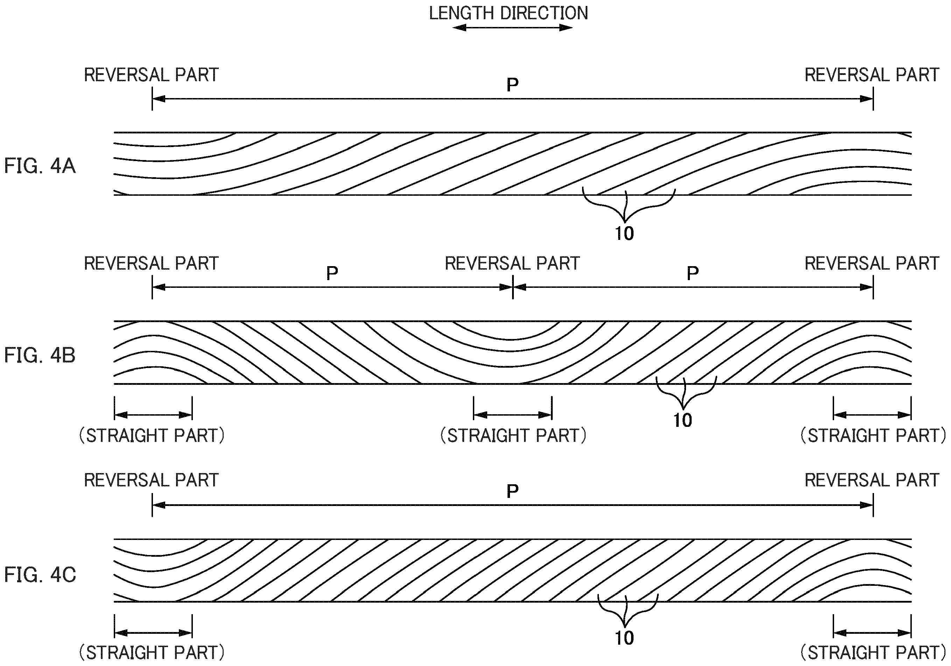

Figs. 4A to 4C are explanatory diagrams illustrating methods for twisting a plurality of optical fiber units 10. The figure illustrates an assembly (core) obtained by twisting together a plurality of optical fiber units 10. The core obtained by twisting together the optical fiber units 10 is housed inside the outer sheath 20 of the optical cable 1. It should be noted that, in this figure, the optical fibers 11 constituting the optical fiber unit 10 are omitted from being illustrated separately, and only the outer shape of the optical fiber unit 10 is illustrated conceptually.

The figure illustrates a plurality of optical fiber units 10 twisted together in an S-Z configuration. The "reversal part" in the figure indicates the position at which the direction ("twisting direction") in which the plurality of optical fiber units 10 are twisted is reversed. At the reversal part, the twisting direction is reversed such that the plurality of optical fiber units 10 being twisted in the S direction (or Z direction) are then twisted in the Z direction (or S direction). The pitch P illustrated in the figure indicates the interval between reversal parts. The pitch P is the interval (distance) between one reversal part and another reversal part adj acent thereto. More specifically, the pitch P is the interval (distance) between a reversal part at which the plurality of optical fiber units 10 being twisted in the S direction (or Z direction) are reversed toward the Z direction (or S direction) and a reversal part at which the plurality of optical fiber units 10 being twisted in the Z direction (or S direction) are reversed toward the S direction (or Z direction). In this example, the plurality of optical fiber units 10 are twisted together in an S-Z configuration in a manner that the twisting angle in the S direction is substantially the same as the twisting angle in the Z direction. The "twisting angle" refers to the angle by which the optical fiber units 10 are twisted in the circumferential direction (the direction around the axis of the optical cable 1; the S direction or Z direction) between one reversal part and an adjacent reversal part inside the optical cable 1. The twisting angle in the S direction of the optical fiber units 10 may be different from the twisting angle in the Z direction, but making the twisting angle in the S direction substantially the same as the twisting angle in the Z direction can suppress torsion in the optical cable 1.

In cases where the optical fiber units 10 are twisted in an S-Z configuration, there is a possibility that twisting may untwine (i.e., untwisting may occur) at the reversal parts where the twisting direction is reversed, which may result in that, in the vicinity of the reversal parts, the optical fibers 11 may return to a state where they extend along the length direction of the optical cable 1. In the figure, "straight part" refers to a part (region) where the optical fibers 11 are likely to return to a state where they extend along the length direction due to untwisting at a reversal part.

As illustrated in Fig. 4A, by helically twisting the plurality of optical fiber units 10 together, it is possible to reduce differences in fiber length among the optical fibers 11 when the optical cable 1 is bent. It should be noted that, if the optical fiber units 10 are twisted helically in one direction, the structure of the manufacturing system 40 may become complicated, or the task of taking out an optical fiber unit 10 at the time of mid-span branching of the optical cable 1 may become difficult. So, as illustrated in Fig. 4A, the optical fiber units 10 are twisted together in an S-Z configuration by reversing the twisting direction in mid-course.

Fig. 4B is an explanatory diagram of an example wherein the optical fiber units 10 are twisted at a shorter pitch than in Fig. 4A. In order to reduce the allowable bending radius of the optical cable 1, it is desirable to shorten the pitch P. Stated differently, in order to reduce the allowable bending radius of the optical cable 1, it is desirable to increase the twisting angle per unit length of the optical fiber units 10 (=N/P). In other words, in order to reduce the allowable bending radius of the optical cable 1, the twisting method illustrated in Fig. 4B is more desirable than the twisting method illustrated in Fig. 4A.

On the other hand, in cases where the pitch P is shortened without changing the twisting angle N, the twisting angle per unit length of the optical fiber units 10 (=N/P) increases. Thus, if the optical fiber units 10 are twisted in an S-Z configuration at a short pitch, twisting is likely to untwine (untwisting is likely to occur) at reversal parts where the twisting direction is reversed. As a result, in the vicinity of the reversal parts, the optical fibers 11 are likely to return to a state where they extend along the length direction of the optical cable 1, and thus, straight parts are likely to be formed in the vicinity of the reversal parts. If the percentage of parts (i.e., straight parts) in the optical fibers extending along the length direction becomes high, transmission loss may increase when the optical cable 1 is bent. Also note that, when the optical fiber units 10 are twisted in an S-Z configuration at a short pitch as in the later-described Examples, twisting is likely to untwine (untwisting is likely to occur) at reversal parts where the twisting direction is reversed, and as a result, it may not be possible to maintain the optical fiber units 10 in an S-Z twisted state.

Fig. 4C is an explanatory diagram of an example wherein the twisting angle is set to a larger angle than in Fig. 4B. In this example, for the sake of explanation, the twisting angle per unit length of the optical fiber units 10 (=N/P) illustrated in Fig. 4C is the same as the twisting angle per unit length of the optical fiber units 10 illustrated in Fig. 4B.

Also in the twisting method illustrated in Fig. 4C, since the twisting angle per unit length of the optical fiber units 10 (=N/P) is the same as in the twisting method illustrated in Fig. 4B, twisting is likely to untwine (untwisting is likely to occur) at reversal parts where the twisting direction is reversed, and as a result, there is a high possibility that straight parts will be formed in the vicinity of the reversal parts. However, in the twisting method illustrated in Fig. 4C, the twisting angle is made larger than in Fig. 4B, and as a result, the reversal pitch P illustrated in Fig. 4C is longer than the reversal pitch illustrated in Fig. 4B. In this way, according to the twisting method illustrated in Fig. 4C, the number of reversal parts with respect to the entire length of the optical cable 1 in the length direction can be reduced compared to the twisting method illustrated in Fig. 4B, and thus, it is possible to reduce the rate of parts that may become straight parts. Therefore, according to the twisting method illustrated in Fig. 4C, it is possible to suppress transmission loss (i.e., it is possible to improve later-described bending properties) when the optical cable 1 is bent, compared to the twisting method illustrated in Fig. 4B.

Therefore, in contrast to ordinary cases where the twisting angle of the optical fiber units 10 is around 270 degrees (N=270), in the present embodiment, the twisting angle of the optical fiber units 10 is set to 540 degrees or greater.

### FIRST EXAMPLES:

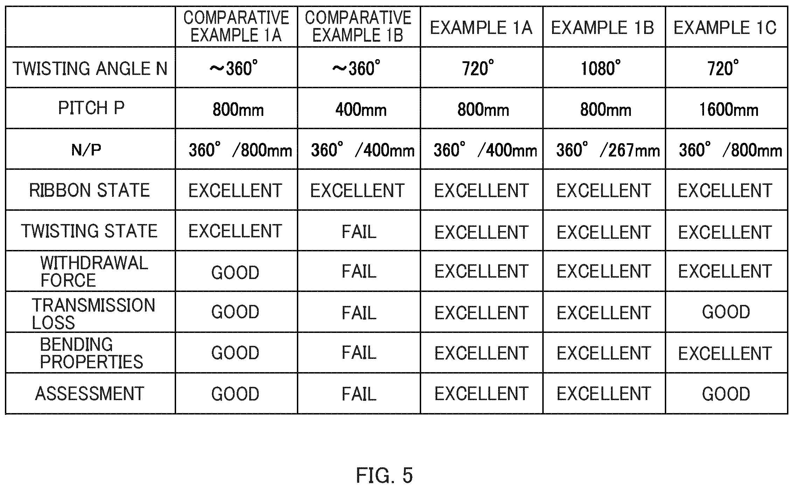

Fig. 5 is a comparison table of First Examples. It should be noted that the twisting methods illustrated in Fig. 4A, Fig. 4B, and Fig. 4C described above respectively correspond to the relationship between the twisting methods of Comparative Example 1A, Comparative Example 1B, and Example 1A as shown in the Table.

In the First Examples, optical cables 1 having the structure illustrated in Fig. 1A were produced. In these examples, a single optical fiber unit 10 was constituted by six pieces of 12-fiber intermittently-connected optical fiber ribbons, and six optical fiber units 10 were twisted in an S-Z configuration, to produce a 432-fiber optical cable including thirty-six pieces of intermittently-connected optical fiber ribbons. The outer diameter of the optical cable 1 was about 11 mm, and the housing area inside the outer sheath 20 was about 60 mm². A plurality of types of optical cables 1 having different twisting angles N and pitches P were produced. It should be noted that the "twisting angle N" in the Table indicates the angle by which the optical fiber units 10 were twisted in the circumferential direction (the direction around the axis of the optical cable 1) between one reversal part and the next reversal part inside the optical cable 1. (The "twisting angle N" in the Table is not the rotation angle of the guide disk 44 during manufacturing of the optical cable 1.)

For each of the plurality of types of optical cables 1 produced, the ribbon state, twisting state, fiber withdrawal force, transmission loss, and bending properties were evaluated.

To evaluate the ribbon state, whether or not connection parts (parts that intermittently connect two adjacent optical fibers 11) in the intermittently-connected optical fiber ribbon were destroyed was observed. In cases where the connection parts were not destroyed, the cable was evaluated as "Excellent". In cases where the connection parts were destroyed, the cable was evaluated as "Fail". To evaluate the twisting state, whether or not the optical fiber units 10 were twisted by a predetermined twisting angle was observed. In cases where the optical fiber units 10 were twisted by a predetermined twisting angle, the cable was evaluated as "Excellent". In cases where the optical fiber units 10 were not twisted by a predetermined twisting angle, the cable was evaluated as "Fail".

To evaluate the fiber withdrawal force, the optical fiber cable was cut to a length of 10 m, an optical fiber 11 (jacketed optical fiber) was drawn out from the cable, and the tension (fiber withdrawal force) when the optical fiber 11 started to move on the opposite side from the drawing end was measured. In cases where the fiber withdrawal force was 25 N/10 m or greater, the cable was evaluated as "Excellent". In cases where the fiber withdrawal force was less than 25 N/10 m and 15 N/10 m or greater, the cable was evaluated as "Good". In cases where the fiber withdrawal force was less than 15 N/10 m, the cable was evaluated as "Fail".

To evaluate transmission loss, transmission loss was measured at a wavelength of 1550 nm according to the OTDR method with respect to a drum-wound optical cable 1. In cases where transmission loss was 0.25 dB/krn or less, the cable was evaluated as "Excellent". In cases where transmission loss was 0.30 dB/krn or less (and greater than 0.25 dB/km), the cable was evaluated as "Good". In cases where transmission loss was greater than 0.30 dB/km, the cable was evaluated as "Fail".

To evaluate bending properties, a wrapping test according to IEC60794-1-21 E11A/IEC60794-3-10 was conducted, and transmission loss of the optical cable 1 was measured. In the wrapping test, the diameter of the mandrel was set to 20 times the outer diameter of the cable, the number of wraps was set to 4 turns, and the number of cycles (the number the same test was repeated) was set to 3 cycles. If the increase in transmission loss after the wrapping test was 0.05 dB or less per single optical fiber and also the increase in transmission loss during the test was 0.05 dB or less per single optical fiber, the cable was evaluated as "Excellent". If the increase in transmission loss after the wrapping test was 0.05 dB or less per single optical fiber, the cable was evaluated as "Good". If the increase in transmission loss after the wrapping test was greater than 0.05 dB per single optical fiber, the cable was evaluated as "Fail".

As for the overall assessment, in cases where all of the evaluation items were "Excellent", the cable was evaluated as "Excellent". In cases where none of the evaluation items included "Fail", the cable was evaluated as "Good". In cases where at least one evaluation item included "Fail", the cable was evaluated as "Fail".

In Comparative Example 1A and Comparative Example 1B, the twisting angle N was the same, whereas the pitch P in Comparative Example 1B was shortened to half the pitch of Comparative Example 1A. Note, however, that in Comparative Example 1B, since the twisting angle per unit length (=N/P) was large, the twisting came loose at the reversal parts, and as a result, it was not possible to keep the optical fiber units 10 in an S-Z twisted state. (Therefore, in Comparative Example 1B, it was not possible to evaluate withdrawal force, transmission loss, and bending properties.)

In contrast, in Example 1A, the twisting angle per unit length (=NIP) was set to be the same as that in Comparative Example 1B, but in Example 1A, the pitch P was set to be longer than in Comparative Example 1B, and as a result, it was possible to keep the optical fiber units 10 in an S-Z twisted state even though straight parts were formed in the vicinity of the reversal parts. As shown above, it was found that, even in cases where the twisting angle per unit length (=NIP) was large (i.e., even in cases where N/P was so large that when the twisting angle N was 360 degrees, the twisting state became "Fail"), the twisting state was improved by increasing the twisting angle N and also increasing the pitch P. Note that, also in Example 1B, it was found that, since the twisting angle N was greater and the pitch P was longer than in Comparative Example 1B, the twisting state was improved, as in Example 1A.

Further, in Example 1A, the bending properties were improved compared to Comparative Example 1A. This is thought to be because, in Example 1A, the twisting angle per unit length of the optical fiber units 10 (=N/P) was greater than that in Comparative Example 1A, and it was thus possible to suppress transmission loss when the optical cable 1 was bent. Note that, also in Example 1B, the bending properties were improved compared to Comparative Example 1A, as in Example 1A. This is also thought to be because, in Example 1B, the twisting angle per unit length of the optical fiber units 10 (=N/P) was greater than that in Comparative Example 1A, and it was thus possible to suppress transmission loss when the optical cable 1 was bent.

In Example 1C, the twisting angle per unit length (=N/P) was the same as that in Comparative Example 1A, but in Example 1C, the twisting angle was greater and the pitch P was longer than in Comparative Example 1A. This relationship between Comparative Example 1A and Example 1C corresponds to the relationship between the twisting method of Fig. 4B and the twisting method of Fig. 4C described above. Thus, in Example 1C, it was possible to reduce the rate of straight parts with respect to the entire length of the optical cable 1 in the length direction, as compared to Comparative Example 1A. The reason that the fiber withdrawal force and bending properties slightly improved in Example 1C compared to Comparative Example 1A is therefore thought to be because it was possible to reduce the rate of straight parts with respect to the entire length of the optical cable 1 in the length direction. As described above, not only from the comparison between Comparative Example 1B and Example 1A, but also from the comparison between Comparative Example 1A and Example 1C, it was found that it is effective to increase the twisting angle N and also increase the pitch P.

### SECOND EXAMPLES:

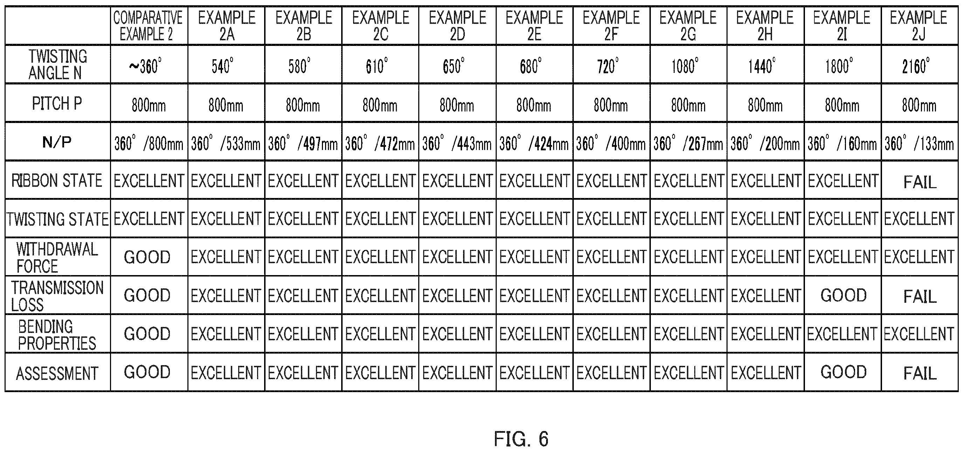

Fig. 6 is a comparison table of Second Examples. It should be noted that Comparative Example 1A, Example 1A, and Example 1B in Fig. 5 described above respectively correspond to Comparative Example 2, Example 2F, and Example 2G in Fig. 6.

As in the First Examples, also in the Second Examples, optical cables 1 having the structure illustrated in Fig. 1A were produced. More specifically, a single optical fiber unit 10 was constituted by six pieces of 12-fiber intermittently-connected optical fiber ribbons, and six optical fiber units 10 were twisted in an S-Z configuration, to produce a 432-fiber optical cable including thirty-six pieces of intermittently-connected optical fiber ribbons. The outer diameter of the optical cable 1 was about 11 mm, the housing area inside the outer sheath 20 was about 60 mm², and the pitch P was 800 mm. A plurality of types of optical cables 1 having different twisting angles N within the range of 360 to 720 degrees were produced. It should be noted that the "twisting angle N" in the Table indicates the angle by which the optical fiber units 10 were twisted in the circumferential direction (the direction around the axis of the optical cable 1) between one reversal part and the next reversal part inside the optical cable 1.

As shown in Fig. 6, in cases where the twisting angle N was 540 degrees or greater, bending properties were improved compared to Comparative Example 2. This is thought to be because, in Examples 2A to 2J, the twisting angle per unit length of the optical fiber units 10 (=N/P) was greater than that in Comparative Example 2, and it was thus possible to suppress transmission loss when the optical cable 1 was bent. Therefore, as shown in Fig. 6, it is preferable that the twisting angle N of the optical fiber units 10 is 540 degrees or greater.

Further, as shown in Fig. 6, in a case where the twisting angle N was 2160 degrees, some destruction of connection parts in the intermittently-connected optical fiber ribbon was observed. The reason that the connection parts were destroyed is thought to be because the optical fiber ribbon was strongly twisted. Therefore, it is preferable that the twisting angle N of the optical fiber units 10 is less than 2160 degrees. Stated differently, the twisting angleN of the optical fiber units 10 is preferably from 540 degrees to 1800 degrees.

Further, as shown in Fig. 6, transmission loss deteriorated in cases where the twisting angle N was 1800 degrees or greater. The reason to this is thought to be because the optical fiber ribbons were strongly twisted, which resulted in localized increase in the packaging density of the optical fibers 11, leading to an increase in microbending loss. Therefore, it is further preferable that the twisting angle N of the optical fiber units 10 is less than 1800 degrees. Stated differently, the twisting angle N of the optical fiber units 10 is further preferably from 540 degrees to 1440 degrees.

### THIRD EXAMPLES:

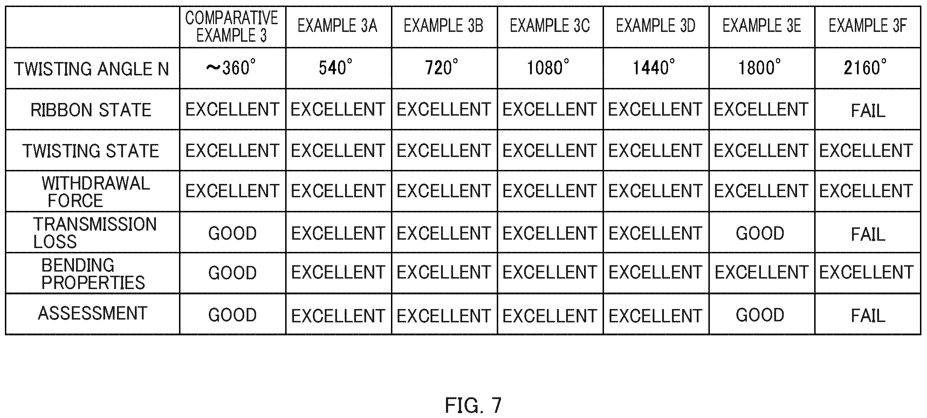

Fig. 7 is a comparison table of Third Examples.

As for the Third Examples, optical cables having the structure illustrated in Fig. 2 were produced. In this example, a single optical fiber unit 10 was constituted by a single piece of 4-fiber intermittently-connected optical fiber ribbon, and six optical fiber units 10 were twisted in an S-Z configuration, to produce a 24-fiber optical cable including six pieces of intermittently-connected optical fiber ribbons. The cable was a flat optical cable having a minor axis of 3.5 mm and a major axis of 5.5 mm, and the housing area inside the outer sheath 20 was 2.5 mm². A plurality of types of optical cables having different twisting angles N and pitches P were produced. It should be noted that the "twisting angle N" in the Table indicates the angle by which the optical fiber units 10 were twisted in the circumferential direction (the direction around the axis of the optical cable) between one reversal part and the next reversal part inside the optical cable.

As shown in Fig. 7, in cases where the twisting angle N was 540 degrees or greater, bending properties were improved compared to Comparative Example 3. This is thought to be because, in Examples 3A to 3F, the twisting angle per unit length of the optical fiber units 10 (=N/P) was greater than that in Comparative Example 3, and it was thus possible to suppress transmission loss when the optical cable was bent. Therefore, as shown in Fig. 7, it is preferable that the twisting angle N of the optical fiber units 10 is 540 degrees or greater.

Further, as shown in Fig. 7, in a case where the twisting angle N was 2160 degrees, some destruction of connection parts in the intermittently-connected optical fiber ribbon was observed. The reason that the connection parts were destroyed is thought to be because the optical fiber ribbon was strongly twisted. Therefore, also in the Third Examples, it is preferable that the twisting angle N of the optical fiber units 10 is less than 2160 degrees. Stated differently, the twisting angle N of the optical fiber units 10 is preferably from 540 degrees to 1800 degrees.

Further, as shown in Fig. 7, transmission loss deteriorated in cases where the twisting angle N was 1800 degrees or greater. The reason to this is thought to be because the optical fiber ribbons were strongly twisted, which resulted in localized increase in the packaging density of the optical fibers 11, leading to an increase in microbending loss. Therefore, it is further preferable that the twisting angle N of the optical fiber units 10 is less than 1800 degrees. Stated differently, the twisting angle N of the optical fiber units 10 is further preferably from 540 degrees to 1440 degrees.

Further, a plurality of types of flat optical cables were also produced by similarly varying the twisting angles N and pitches P, with the housing area inside the outer sheath 20 being set to either 1.8 mm² or 2.0 mm². With the flat optical cables in which the housing area inside the outer sheath 20 was 1.8 mm², it was not possible to twist the plurality of optical fiber units 10 in an S-Z configuration under any of the conditions. In contrast, with the flat optical cables in which the housing area inside the outer sheath 20 was 2.0 mm², the same results as those shown in Fig. 7 were obtained. It was thus found that, under conditions wherein a plurality of optical fiber units 10 can be twisted in an S-Z configuration, it is preferable that the twisting angle N of the optical fiber units 10 is 540 degrees or greater.

### OTHER EMBODIMENTS:

The foregoing embodiments are for facilitating the understanding of the present invention, and are not to be construed as limiting the present invention. The present invention may be modified and/or improved without departing from the gist thereof, and it goes without saying that the present invention encompasses equivalents thereof. Further, the various embodiments described above may be employed in combination, as appropriate.

### REFERENCE SIGNS LIST

1: Optical cable;
10: Optical fiber unit;
11: Optical fiber;
12: Bundling member;
15: Wrapping tape;
17: Intervening member;
20: Outer sheath;
20A: Notch;
21: Tension member;
22: Rip cord;
23: Separator;
40: Manufacturing system;
42: Supplier;
44: Guide disk;
46: Extruder;
48: Controller.

## Claims

1. An optical cable comprising:
a plurality of optical fiber units, the optical fiber unit including a fiber bundle constituted by a plurality of optical fibers, wherein
the plurality of optical fiber units are twisted together in an S-Z configuration by reversing a twisting direction, and
a twisting angle by which the optical fiber units are twisted in a circumferential direction between one reversal part, at which the twisting direction is reversed, and an adjacent reversal part is 540 degrees or greater.

2. The optical cable according to claim 1, wherein
the twisting angle is 1800 degrees or less.

3. The optical cable according to claim 2, wherein
the twisting angle is 1440 degrees or less.

4. The optical cable according to any one of claims 1 to 3, wherein
the optical fiber unit includes a bundling member configured to bundle the plurality of optical fibers.

5. The optical cable according to claim 4, wherein
the optical fiber unit is constituted by an intermittently-connected optical fiber ribbon.

6. The optical cable according to any one of claims 1 to 5, wherein
the twisting angle in an S direction and the twisting angle in a Z direction are substantially the same.
